# NEW EUROPEAN PATENT SPECIFICATION

(11) **EP 3 186 051 B2**
(45) Date of publication and mention of the opposition decision: **30.04.2025**
(45) Mention of the grant of the patent: 11.04.2018
(21) Application number: 15804488.3
(22) Date of filing: 03.12.2015
(51) Int. Cl.: B29B 7/60, B29B 7/72, B29C 48/00, B29C 48/04, B29C 48/285, B29C 48/92, B29B 7/74, C08J 3/20, G05D 11/13, B29B 7/38, B29B 9/06

(54) **PROCESS FOR PREPARING A POLYOLEFIN COMPOSITION**
VERFAHREN ZUR HERSTELLUNG EINER POLYOLEFINZUSAMMENSETZUNG
PROCÉDÉ DE PRÉPARATION D'UNE COMPOSITION DE POLYOLÉFINE

(30) Priority: 04.12.2014 EP 14196371
(43) Date of publication of application: 05.07.2017
(73) Proprietor: Basell Polyolefine GmbH, 50389 Wesseling (DE)
(72) Inventor: KRUEMPEL, Peter, 65520 Bad Camberg (DE); DAMM, Elke, 61118 Bad Vilbel (DE); KUEHL, Reinhard, 53332 Bornheim (DE); PYMAN, Phil, Lymm Cheshire WA 13 9 DY (GB)
(74) Representative: LyondellBasell
(86) International application number: PCT/EP2015/078473
(87) International publication number: WO 2016/087566

(56) References cited:
- EP-A1- 0 881 237
- EP-A1- 2 016 995
- EP-A1- 2 030 757
- EP-A2- 0 238 796
- WO-A1-00/35646
- WO-A1-2004/004996
- WO-A1-2011/058861
- WO-A1-2011/101438
- WO-A1-2015/101668
- WO-A2-2005/068516
- US-A- 3 638 916
- US-A- 4 448 736
- US-A- 4 510 271
- US-A- 5 314 579
- US-A1- 2003 096 901
- US-A1- 2004 020 272
- US-A1- 2006 063 896
- US-A1- 2006 287 442
- US-A1- 2011 124 545
- US-A1- 2013 099 424
- US-B1- 6 254 374
- US-B1- 6 492 485
- US-B2- 8 543 242
- "Feedings & Conveying in Polyolefin Production brochure", K-TRON PROCESS GROUP, February 2010 (2010-02-01), pages 1 - 12, XP055550651
- "Application Example Polyolefins/Bulk Polymer Compounding brochure", K-TRON PROCESS GROUP, September 2001 (2001-09-01), pages 1 - 4, XP055550653
- TOLINSKI: "Additives for Polyolefins", 2009, Oxford, UK, ISBN: 978-0-81-552051-1, article CHAPTER 9, pages: 139 - 141, 148-150, 237-239, XP055550658
- "Optimising feeding and conveying during polyolefin production Success depends on the components", CPP.INDUSTRIE.DE, 29 March 2011 (2011-03-29), XP055550153, Retrieved from the Internet <URL:https://cpp.industrie.de/plant-processinq/success-depends-on-the-components>
- PERRY R. ET AL: "Perry's Chemical Engineers", 1984, article "MIXING", pages: 21-5 - 21-7, XP055550161
- K-TRON Product Specification Smart Flow Meter, 2009
- K-Tron product specification smart how Meter, file properties
- K-TRON Product Specification Smart Flow Meter, Google search
- Coperion K-Tron, Application Example, Feeding & Conveying in Polyolefin Production, 2014

## Description

### FIELD OF THE INVENTION

The present disclosure provides a process for continuously preparing a polyolefin composition comprising bimodal or multimodal polyolefin and one or more additives. The present disclosure especially provides a process for continuously preparing a polyolefin composition comprising polyolefin and one or more additives, in which the polyolefin is a bimodal or multimodal high density polyethylene.

### BACKGROUND OF THE INVENTION

Polyolefins are the most widely used commercial polymers. To achieve and maintain the desired properties, it is however essential that the polymers are equipped with additional substances. These so-called plastics additives are auxiliary compounds which significantly influence the properties of the polymers and make the polymers commercially useful, although the additives are only added in small quantities. The additives are usually combined with the polyolefins directly after their polymerization during the pelletizing step.

US 4,448,736 discloses a continuous in-line melt flow rate control system in a process for preparing a degraded polymer, in which the viscosity of a slip stream of melt from the extruder is monitored and the amount of degradent, such as a peroxide, fed to the extruder is adjusted. EP 2 030 757 A1 describes a process of purging an extrusion apparatus by removing a residual amount of an extrusion polymer from the extrusion apparatus by displacing the residual amount of the extrusion polymer by a purging polymer. The device for feeding polymer powder to the extrusion apparatus is equipped with a flow meter.

Polyolefins with an outstanding combination of properties are so-called bimodal or multimodal polyolefins. These polymers are frequently prepared in a cascade of two or more polymerization reactors which usually have different polymerization conditions. The individual particles of the polyolefin powder obtained in such polymerization processes may vary strongly in their composition. Accordingly, particular efforts are needed to homogenize these polyethylenes in the pelletizing step. For example, WO 2004/096523 A1 discloses a particular extruder configuration for melting and homogenizing multimodal or bimodal polyolefins.

For the preparation of bimodal or multimodal polyolefins with outstanding properties it is however not only needed that the polymeric components of the polyolefins are extremely well homogenized but it is also required that the plastics additives are very uniformly distributed within the polymer. This uniformity should not only include a very even homogenization throughout the polymeric material but also include that the ratio of plastics additives to polyolefinic material and the ratio between the different additives is substantially identical for all polyolefin pellets. Furthermore, it should be possible to achieve this homogeneous distribution by a reliable and economic method.

There is accordingly a need to overcome the disadvantages of the prior art and to provide a process which allows to achieve a very uniform distribution of additives in polyolefin compositions comprising a bimodal or multimodal polyethylene, especially in polyolefin compositions comprising bimodal or multimodal high density polyethylene, and which process can be carried out economically, reliably, and with high dosing accuracy.

### SUMMARY OF THE INVENTION

The present disclosure provides a process for continuously preparing a polyolefin composition comprising bimodal or multimodal polyolefin and one or more additives in an extruder device equipped with at least one hopper preparing polyolefin pellets of the polyolefin composition in the extruder device, the process comprising
(i) supplying a bimodal or multimodal polyolefin in form of a polyolefin powder at a flow rate to the hopper of the extruder device;
(ii) measuring a flow rate of the polyolefin pellets prepared in the extruder device;
(iii) supplying one or more additives to the same hopper;
(iv) adjusting the flow rate of the polyolefin powder to the hopper in response to the measured flow rate of the polyolefin pellets and either keeping the flow rate(s) of the one or more additives supplied to the hopper constant or also adjusting the flow rate(s) of the one or more additives supplied to the hopper in response to the measured flow rate of the polyolefin pellets;
(v) transferring the polyolefin powder and the additives from the hopper into the extruder device;
(vi) melting and homogenizing the polyolefin powder and additives within the extruder device to form a molten polyolefin composition; and
(vii) pelletizing the molten polyolefin composition, thereby yielding the polyolefin pellets.

In some embodiments, the flow rate of the polyolefin pellets is measured by a solids flow meter.

In some embodiments, the polyolefin powder is supplied from a storage vessel, into which the polyolefin powder is kept in free flowing state by a discharging aid.

In some embodiments, the polyolefin powder and the one or more additives are first supplied to a mixing device, which mixes the polyolefin powder and the additives, and the mixture of polyolefin powder and additives is then transferred from the mixing device to the hopper, and wherein the flow rate(s) of the one or more additives are measured while being supplied to the mixing device the flow rate(s) of the one or more additives and the polyolefin powder supplied to the mixing device are adjusted in response to the measured flow rate of the polyolefin pellets.

In some embodiments, the mixing device is a paddle mixer comprising two horizontally orientated counter-rotating shafts.

In some embodiments, the polyolefin powder is transferred from the storage vessel to the hopper by gravity.

In some embodiments, the polyolefin powder is obtained by polymerizing one or more 1-olefins in a cascade of at least two polymerization reactors.

In some embodiments, the polyolefin in a polyethylene.

In some embodiments, the polyethylene is a high density polyethylene having a density determined according to ISO 1183 at 23°C from 0.945 to 965 g/cm³.

In some embodiments, one of the additives is carbon black.

In some embodiments, the carbon black is fed in form of a carbon black masterbatch.

In some embodiments, the process additionally comprises
(viii) supplying polyolefin pellets to the same hopper; and
(ix) adjusting the flow rate of the polymer pellets fed to the hopper in response to the measured flow rate of the polyolefin pellets.

In some embodiments, the extruder device is a continuous mixer with counter rotating and intermeshing double screw or the extruder device comprises at least one co-rotating double screw extruder.

### BRIEF DESCRIPTION OF THE DRAWINGS

The following figures illustrate of the subject matter disclosed herein. The claimed subject matter may be understood by reference to the following description taken in conjunction with the accompanying figures, in which like reference numerals identify like elements, and in which:
Figure 1 shows schematically a comparative set-up for preparing a polyolefin composition in which the polyolefin powder and the additives are supplied directly to the hopper of the extruder device.
Figure 2 shows schematically a comparative set-up for preparing a polyolefin composition in which the polyolefin powder and the additives are first supplied to a mixing device before being transferred to the hopper of the extruder device.

The present disclosure refers to a process for preparing a polyolefin composition comprising bimodal or multimodal polyolefin and one or more additives. Suitable polyolefins are obtained by polymerizing olefins and especially by polymerizing 1-olefins, i.e. hydrocarbons having terminal double bonds, without being restricted thereto. Preferred monomers are nonpolar olefinic compounds, including aryl-substituted 1-olefins. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene or vinylaromatic compounds such as styrene or substituted styrene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process of the present disclosure is in particular a process for preparing polyolefin compositions comprising polyolefins which were obtained by homopolymerization or copolymerization of ethylene or propylene. As comonomers in propylene polymerization preference is given to using up to 40 wt.% of ethylene and/or 1-butene.

In a preferred embodiment, the process of the present disclosure refers to preparing a polyolefin composition comprising polyolefins obtained by homopolymerizing or copolymerizing ethylene. Particular preference is given to preparing polyolefin compositions comprising polyethylenes in which ethylene is copolymerized with up to 40 wt.% of C₃-C₈-1-alkenes, preferably 1-butene, 1-pentene, 1-hexene, 1-octene, or mixtures thereof. Particular preference is given to a process in which ethylene is copolymerized with up to 20 wt.% of 1-butene, 1-hexene, or mixtures thereof.

All industrially known polymerization methods may be used for preparing the polyolefins. This includes solution processes, suspension processes, and gas-phase processes. The polymerization can be carried out batchwise or preferably continuously in two or more stages. Processes of this type are generally known to those skilled in the art. Among the polymerization processes mentioned, gas-phase polymerization, in particular in gas-phase fluidized-bed reactors or multi-zone circulating gas-phase reactors and suspension polymerization, in particular in loop reactors or stirred tank reactors are preferred.

The process of the present disclosure is employed for preparing polyolefin compositions of all types of common polyolefin polymers. The process of the present disclosure is especially suitable for preparing polyolefin compositions comprising bimodal or multimodal polyolefins whereby the terms bimodal and multimodal refer to the modality of the molecular weight distribution. Such polymers can be obtained from polymerizing olefins in a cascade of two or more polymerization reactors under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. Frequently used in the art, and also used herein, the term multimodal can include bimodal. In addition to the molecular weight distribution, the polyolefin polymer can also have a comonomer distribution, wherein preferably the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight polyolefin polymers. A complication in producing multimodal polyolefins in a cascade of polymerization reactors operating at different reaction conditions is however that, caused by different residence times of individual polyolefin particles in the different reactor, the composition of the individual polyolefin particles of a polyolefin powder may vary strongly.

The polymerization can be carried out using all customary olefin polymerization catalysts. That means the polymerization can be carried out, for example, using Phillips catalysts based on chromium oxide, using titanium-based Ziegler- or Ziegler-Natta-catalysts, using single-site catalysts, or using mixtures of such catalysts. The preparation and use of these catalysts for olefin polymerization are generally known.

The polyolefins are usually obtained as powder that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 100 to about 3000 µm. Preferred polyolefin powders have a mean particle diameter of from 150 to 250 µm. The particle size distribution can, for example, advantageously be determined by sieving. Suitable technics are e.g. vibrating sieve analysis or sieve analysis under an air jet.

Preferred polyolefins for preparing the polyolefin compositions of the present disclosure are polyethylenes having an ethylene content of from 50 to 100 wt.%, more preferably from 80 to 100 wt.%, and in particular from 98 to 100 wt.%. Accordingly, the content of other olefins in the polyethylenes is preferably from 0 to 50 wt.%, more preferably from 0 to 20 wt.%, and in particular from 0 to 2 wt.%.

The density of preferred polyethylene compositions obtained by the process of the present disclosure is from 0.90 g/cm³ to 0.97 g/cm³. Preferably the density is in the range of from 0.920 to 0.968 g/cm³ and especially in the range of from 0.945 to 0.965 g/cm³. The density has to be understood as being the density determined according to DIN EN ISO 1183-1:2004, Method A (Immersion) with compression molded plaques of 2 mm thickness which were pressed at 180°C, 20MPa for 8 minutes with subsequent crystallization in boiling water for 30 minutes.

The melt flow rate MFR_{21.6} at 190°C under a load of 21.6 kg of the polyethylene compositions, determined according to DIN EN ISO 1133:2005 condition G, is from 1 g/10 min to 80 g/10 min, preferably from 2 g/10 min to 50 g/10 min and especially from 5 g/10 min to 25 g/10 min.

The polyolefin compositions are prepared by combining the polyolefins with one or more additives. Such additives are common in the art. Especially for multimodal polyolefins it is however essential that they are very uniformly distributed within the polyolefin. Suitable types of additives for preparing polyolefin compositions are, for example, antioxidants, light stabilizers, acid scavengers, lubricants, processing aids, antiblocking agents, slip agents, antistatics agents, antifogging agents, pigments or dyes, nucleating agents, flame retardants or fillers. It is common that several additives are added to the polyolefin compositions. The multiple additives can be different types of additives. It is however also possible that several representatives of one type of additives are added to one polyolefin composition. Additives of all these types are generally commercially available and are described, for example, in Hans Zweifel, Plastics Additives Handbook, 5th Edition, Munich, 2001.

In a preferred embodiment of the present disclosure, one of the additives is carbon black. The polyolefin composition is then usually equipped not only with carbon black but also further with one or more other additives. Preferably the carbon black is supplied to the hopper of the extruder device in form of a carbon black masterbatch.

The process of the present disclosure is carried out using an extruder device equipped with at least one hopper. The hopper is present to receive material which is intended to be fed to the extruder device. The material is then transferred from the hopper into the extruder device. The extruder device of the present disclosure is equipped with at least one hopper to which the polyolefin powder and at least one additive are supplied. The extruder device can however also be equipped with one or more additional hoppers for feeding additional materials to the extruder device.

The extruder device serves for melting the polyolefin powder, homogenizing the polyolefin melt as such and uniformly distributing the additives within the polyolefin melt. This occurs preferably by applying heat and mechanical energy to the mixture of polyolefin powder and additives. Suitable extruder device for the process of the present disclosure are extruders or continuous mixers. These extruders or mixers can be single- or two-stage machines which melt and homogenize the polyethylene composition. Examples of extruders are pin-type extruders, planetary extruders or corotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter rotating and intermeshing double screw or the extruder device comprises at least one co-rotating double screw extruder. Machinery of this type is conventional in the plastics industry and is manufactured by, for example, Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Suitable extruder devices are further usually equipped with units for pelletizing the melt, such as underwater pelletizers.

The process of the present invention is characterized in that as well the polyolefin in form of a polyolefin powder as the one or more additives are supplied to one hopper and the combined material is then transferred into the extruder device for melting and further mixing. Preferably the polyolefin powder is supplied from a storage vessel and in particular from a storage vessel having a conical bottom. In a preferred embodiment the storage vessel for supplying the polyolefin powder is equipped with a discharging aid which keeps the polyolefin powder in free flowing state. A preferred discharging aid is for example the introduction of an inert gas, preferably nitrogen, into the bottom to the storage vessel, more preferably into a conical bottom of the storage vessel. The polyolefin powder is preferably transferred from the storage vessel to the hopper by gravity.

The additives are preferably supplied from dedicated storage vessels for the additives. It is however also possible to supply the additives directly from transport containers such as big bags. The additives which are utilized for preparing the polyolefin compositions of the present disclosure can be supplied in solid form, preferably in form of small particles, or they can be liquid or they are fed in dissolved form. It is possible to supply all additives individually or it is possible to supply one or more mixtures of additives comprising some of the selected additives or a mixture of all additives is supplied with the polyolefin powder. Preferably all additives are supplied in form of solid particles.

The prepared polyolefin compositions comprise polyolefin and one or more additives. The composition of the prepared polyolefin compositions is preferably defined by a recipe which identifies the nature of the employed polyolefin powder, the nature of the additives, their number, their quantity and their ratio. The constitution of the prepared polyolefin compositions may differ significantly from prepared polyolefin compositions to prepared polyolefin compositions. However, all polyolefin compositions comprise a majority of polyolefin. Preferably the polyolefin portion of the prepared polyolefin compositions is from 80 to 99.98 wt.%, more preferable from 95 to 99.95 wt.%, and especially from 98 to 99.9 wt.%. The present disclosure not only refers to preparing such polyolefin compositions with a very homogenous distribution of the additives within the polyolefin composition but also to producing these compositions accurately with a very constant ratio of the components in an economical and reliable way.

The amount of polyolefin powder supplied to the hopper of the extruder device is preferably regulated by a suitable feeding device such as a rotary valve or a screwfeeder. By varying the speed of the feeding device, the amount of polyolefin powder supplied to the extruder device can be altered. The speed of the feeding device is preferably controlled by a controller in a way that the fed amount of polyolefin powder corresponds to a preselected set-point corresponding to the desired portion of the polyolefin in the polyolefin composition.

Measuring the flow rate of the polyolefin pellets prepared in the extruder device allows to adjust the flow rate of the polyolefin powder to the extruder device is adjusted based on the actual amount of polyolefin pellets produced in the extruder device. By using a measurement of the flow rate of the produced polymer pellets for adjusting the flow rate of the polyolefin powder, variations in the speed of the polyolefin powder feeding device are still compensated; however possible difficulties in measuring polymer flow rates of polymer particles having a certain stickiness are substantially reduced. The flow rate of the polyolefin pellets is preferably measured on dried polyolefin pellets, i.e. preferably downstream of the usually employed underwater pelletizer and centrifugal drier. The flow rates of the one or more additives supplied to the hopper are either kept constant at a pre-determined value and the ratio of additives to polyolefin in the polyolefin composition is controlled by only adjusting the flow rate of the polyolefin powder supplied to the hopper or, preferably, both the flow rate of the polyolefin powder and the flow rates of the one or more additives supplied to the hopper are adjusted based on the actual amount of polyolefin pellets produced in the extruder device, preferably employing different control characteristics for controlling the flow rates of the one or more additives and for controlling the feed of polyolefin powder.

Preferably, the flow rate of the polyolefin pellets prepared in the extruder device is measured by a solids flow meter. Suitable solids flow meters can use impact plate, measuring chute or Coriolis measuring technologies. Such solids flow meters are commercially available, for example from Schenck Process, Whitewater, WI, USA or Coperion K-Tron, Gelnhausen, Germany. The solids flow meter is preferably equipped with a controller. This controller allows adjusting the speed of the feeding device, which supplies the polyolefin powder to the extruder, based on information regarding the actually supplied amount of polyolefin powder.

The measured flow rate of the polyolefin pellets is used to adjust the flow rates of the one or more additives supplied to the hopper. For that, the controller of the solid flow meter transmits a signal, which is indicative of the flow rate of the polyolefin powder to the hopper to a computing unit such as a computer. The computing device continuously calculates set points for the desired flows of additives to the hopper which set points reflect the amounts of polyolefin powder actually supplied to the extruder device.

In a preferred embodiment of the present disclosure, the process for preparing a polyolefin composition further comprises additionally supplying polyolefin pellets to the hopper of the extruder device. This option gives the possibility to further add already pelletized polymer material to the polyolefin composition. These pelletized polymer material are preferably added in smaller amounts. Examples of pelletized polymer material, which can advantageously be added to polyolefin composition, are previously produced polyolefin compositions, which do not comply with specified property requirements, or transition materials, which were obtained in a polymerization while transitioning from one polyolefin grade to another. The polyolefin pellets are preferably supplied to the same hopper as the polyolefin powder and the additives. The flow rate of the polyolefin pellets to the hopper is preferably also adjusted based on the measured flow rate of the polyolefin pellets. The computing device then continuously calculates a set point for the desired flows of polyolefin pellets to the hopper.

The combination of polyolefin powder and additives is transferred from the hopper into the extruder device and then molten and homogenized within the extruder device. The melt is thereafter passed to a pelletizing unit and there transformed into pellets.

In a preferred embodiment of the present disclosure, the polyolefin powder and the additives are not directly supplied to the hopper of the extruder device but are first mixed and then supplied as mixture to the hopper of the extruder device. For that, the polyolefin powder and the one or more additives are supplied to a mixing device. The flow rates of the one or more additives supplied to the mixing device are then is adjusted in response to the measured flow rate of the polyolefin pellets. Preferred mixing devices are paddle mixers comprising two horizontally orientated counter-rotating shafts. The shafts are equipped with paddles of an appropriate geometry. The rotating shafts move the composition of polyolefin powder and additives horizontally along the axis of the shafts and at the same time mix them intensively. Such paddle mixers are commercially available, for example, from Köllemann GmbH, Adenau, Germany or J. Engelsmann AG, Ludwigshafen, Germany. The mixture of polyolefin powder and additives exits the mixing device at the end of the shafts and is then transferred, preferably by gravity, to the hopper of the extruder device.

Figure 1 shows schematically a comparative set-up for preparing a polyolefin composition.

Polyolefin powder is provided via line (1) to a polyolefin powder storage vessel (2). To maintain flowability of the polyolefin powder in the storage vessel (2), nitrogen is introduced into storage vessel (2) from the bottom via line (3). The polyolefin powder is supplied via line (4) to rotary valve (5) which is operated by a motor M. The polyolefin powder is then further transferred by gravity via line (6) to hopper (7) of extruder device (8) which is also operated by a motor M. By varying the speed of motor M of rotary valve (5), the flow rate of the polyolefin powder supplied to hopper (7) can be adjusted. On the way from rotary valve (5) to hopper (7), the polyolefin powder passes a solid flow meter (9) which measures the flow rate of the polyolefin powder to hopper (7), that means measures the amount of polyolefin powder delivered to hopper (7) per time unit. Solid flow meter (9) is equipped with a controller (10). Controller (10) on the one hand sends a signal (11) to motor M of rotary valve (5) for adjusting the flow rate of the polyolefin powder if the flow rate measured by solid flow meter (9) differs from the targeted set point of the flow rate previously implemented in controller (10). On the other hand, controller (10) also send a signal (12), which is indicative of the flow rate of polyolefin powder from storage vessel (2) to hopper (7), to a computing unit (13).

Figure 1 shows two substantially identical units comprising dosing devices (15) for feeding additives in particulate form to hopper (7). It is however also possible to operate the process of the present disclosure with one or three or more of these additive feeding units. In each unit, an additive or an additive mixture is provided via a line (14) to a dosing device (15) being operated by a motor M. Dosing devices (15) are capable of weighing the amount of the additive or additive mixture dosed into lines (16) through which the additives are supplied to hopper (7). Each dosing device (15) is equipped with a controller (17). Controllers (17) receive signals which are indicative of the amounts of additive dosed by respective dosing devices (15) into respective lines (16). The set points for the amounts of additives to be dosed are continuously calculated by computing unit (13) based on signal (12), which is indicative of the flow rate of polyolefin powder from storage vessel (2) to hopper (7), and based on a recipe for the polyolefin composition which recipe was previously implemented in computing unit (13).

The polyolefin powder and the additives are all supplied via lines (6) and (16) to hopper (7), in which they are brought in contact. The combination of polyolefin powder and additives is then transferred into the extruder device (8) and therein molten and homogenized. The melt is conveyed within extruder device (8) to pelletizing unit (18) from which the pelletized polyolefin composition is withdrawn via line (19).

The set-up shown in Figure 1 further includes a unit for supplying polymer pellets to hopper (7). This unit has a pellet storage vessel (20), to which polymer pellets are provided via line (21). The polyolefin pellets are supplied via line (22) to rotary valve (23) which is operated by a motor M. The polyolefin pellets are then further transferred via line (24) to hopper (7) of extruder device (8). The amount of polyolefin pellets supplied to hopper (7) is given by the speed of motor M of rotary valve (23), which speed is set by computing unit (13) based on signal (12), which is indicative of the flow rate of polyolefin powder from storage vessel (2) to hopper (7), and based on the recipe for the polyolefin composition which was previously implemented in computing unit (13).

Figure 2 shows schematically a comparative set-up for preparing a polyolefin composition in which the polyolefin powder and the additives are first mixed in a mixing device (25) before being supplied to the hopper (7) of extruder device (8).

The set-up for preparing a polyolefin composition shown in Figure 2 is identical to that shown in Figure 1, except that the polyolefin powder and the additives are supplied via lines (6) and (16) to mixing device (25). Mixing device (25) is preferably a paddle mixer comprising two horizontally orientated counter-rotating shafts. The mixture of polyolefin powder and additives is transferred by gravity from mixing device (25) to hopper (7) of extruder device (8) via line (26).

By feeding the polyolefin as powder, that means in form of small particles, to the hopper of the extruder and contacting the polyolefin powder already there with the additives, already a combination of polyolefin and additives can be transferred into the extruder device and by that allows to prepare a very uniform distribution of additives throughout all produced polymer pellets. By pre-mixing the polyolefin powder and the additives in a mixing device before supplying them to the hopper of the extruder device, an even more homogeneous distribution can be achieved even if the individual particles of the polyolefin powder employed for preparing the polyolefin compositions vary strongly in their composition.

## Claims

1. A process for continuously preparing a polyolefin composition comprising bimodal or multimodal polyolefin and one or more additives in an extruder device equipped with at least one hopper preparing polyolefin pellets of the polyolefin composition in the extruder device, the process comprising
(i) supplying a bimodal or multimodal polyolefin in form of a polyolefin powder at a flow rate to the hopper of the extruder device;
(ii) measuring a flow rate of the polyolefin pellets prepared in the extruder device;
(iii) supplying one or more additives to the same hopper;
(iv) adjusting the flow rate of the polyolefin powder to the hopper in response to the measured flow rate of the polyolefin pellets and either keeping the flow rate(s) of the one or more additives supplied to the hopper constant or also adjusting the flow rate(s) of the one or more additives supplied to the hopper in response to the measured flow rate of the polyolefin pellets;
(v) transferring the polyolefin powder and the additives from the hopper into the extruder device;
(vi) melting and homogenizing the polyolefin powder and additives within the extruder device to form a molten polyolefin composition; and
(vii) pelletizing the molten polyolefin composition, thereby yielding the polyolefin pellets.

2. The process of claim 1, wherein the flow rate of the polyolefin pellets is measured by a solids flow meter.

3. The process of claim 1 or 2, wherein the polyolefin powder is supplied from a storage vessel, into which the polyolefin powder is kept in free flowing state by a discharging aid.

4. The process of any of claims 1 to 3, wherein the polyolefin powder and the one or more additives are first supplied to a mixing device, which mixes the polyolefin powder and the additives, and the mixture of polyolefin powder and additives is then transferred from the mixing device to the hopper, and wherein the flow rate(s) of the one or more additives are measured while being supplied to the mixing device and the flow rate(s) of the one or more additives and the polyolefin powder supplied to the mixing device are adjusted in response to the measured flow rate of the polyolefin pellets.

5. The process of claim 4, wherein the mixing device is a paddle mixer comprising two horizontally orientated counter-rotating shafts.

6. The process of any of claims 1 to 5, wherein the polyolefin powder is transferred from the storage vessel to the hopper by gravity.

7. The process of any of claims 1 to 6, wherein the polyolefin powder is obtained by polymerizing one or more 1-olefins in a cascade of at least two polymerization reactors.

8. The process of any of claims 1 to 7, wherein the polyolefin in a polyethylene.

9. The process of claim 8, wherein the polyethylene is a high density polyethylene having a density determined according to ISO 1183 at 23°C from 0.945 to 965 g/cm³.

10. The process of any of claims 1 to 9, wherein one of the additives is carbon black.

11. The process of claim 10, wherein the carbon black is fed in form of a carbon black masterbatch.

12. The process according to any of claims 1 to 11, additionally comprising
(viii) supplying polyolefin pellets to the same hopper; and
(ix) adjusting the flow rate of the polymer pellets fed to the hopper in response to the measured flow rate of the polyolefin pellets.

13. The process of any of claims 1 to 12, wherein the extruder device is a continuous mixer with counter rotating and intermeshing double screw or the extruder device comprises at least one co-rotating double screw extruder.

## Patentansprüche

1. Verfahren zum kontinuierlichen Herstellen einer Polyolefinzusammensetzung, umfassend bimodales oder multimodales Polyolefin und ein oder mehrere Additive, in einer Extrudervorrichtung (8), die mit mindestens einem Fülltrichter (7) ausgestattet ist, zur Herstellung von Polyolefinpellets der Polyolefinzusammensetzung in der Extrudervorrichtung (8), wobei das Verfahren umfasst:
(i) Zuführen von bimodalem oder multimodalem Polyolefin in Form eines Polyolefinpulvers mit einer Flussrate zu dem Fülltrichter (7) der Extrudervorrichtung (8);
(ii) Messen einer Flussrate der Polyolefinpellets, die in der Extrudervorrichtung (8) hergestellt werden;
(iii) Zuführen von einem oder mehreren Additiven zu demselben Fülltrichter (7);
(iv) Anpassen der Flussrate des Polyolefinpulvers zu dem Fülltrichter (7) in Reaktion auf die gemessene Flussrate der Polyolefinpellets, und entweder Konstanthalten der Flussrate(n) des einen oder der mehreren Additive, das bzw. die dem Fülltrichter (7) zugeführt wird bzw. werden, oder auch Anpassen der Flussrate(n) des einen oder der mehreren Additive, das bzw. die dem Fülltrichter (7) zugeführt wird bzw. werden, in Reaktion auf die gemessene Flussrate der Polyolefinpellets;
(v) Überführen des Polyolefinpulvers und der Additive aus dem Fülltrichter (7) in die Extrudervorrichtung (8);
(vi) Schmelzen und Homogenisieren des Polyolefinpulvers und der Additive innerhalb der Extrudervorrichtung (8), um eine geschmolzene Polyolefinzusammensetzung zu bilden; und
(vii) Pelletieren der geschmolzenen Polyolefinzusammensetzung, um hierbei die Polyolefinpellets zu erhalten.

2. Verfahren nach Anspruch 1, wobei die Flussrate der Polyolefinpellets durch ein Feststoffdurchflussmessgerät (9) gemessen wird.

3. Verfahren nach Anspruch 1 oder 2, wobei das Polyolefinpulver aus einem Vorratsbehälter (2) zugeführt wird, in dem das Polyolefinpulver durch eine Austragshilfe in einem rieselfähigen Zustand gehalten wird.

4. Verfahren nach einem der Ansprüche 1 bis 3, wobei das Polyolefinpulver und das eine oder die mehreren Additive zuerst einer Mischvorrichtung (25) zugeführt werden, die das Polyolefinpulver und die Additive mischt, und die Mischung des Polyolefinpulvers und der Additive dann aus der Mischvorrichtung (25) in den Fülltrichter (7) überführt wird, und wobei die Flussrate(n) des einen oder der mehreren Additive gemessen wird bzw. werden, während es bzw. sie der Mischvorrichtung (25) zugeführt wird bzw. werden, und die Flussrate(n) des einen oder der mehreren Additive und des Polyolefinpulvers, die der Mischvorrichtung (25) zugeführt werden, in Reaktion auf die gemessene Flussrate der Polyolefinpellets angepasst werden.

5. Verfahren nach Anspruch 4, wobei die Mischvorrichtung (25) ein Paddelmischer ist, der zwei horizontal ausgerichtete, gegenläufig rotierende Wellen umfasst.

6. Verfahren nach einem der Ansprüche 1 bis 5, wobei das Polyolefinpulver durch Schwerkraft aus dem Vorratsbehälter (2) in den Fülltrichter (7) überführt wird.

7. Verfahren nach einem der Ansprüche 1 bis 6, wobei das Polyolefinpulver durch Polymerisieren von einem oder mehreren 1-Olefinen in einer Kaskade von mindestens zwei Polymerisationsreaktoren erhalten wird.

8. Verfahren nach einem der Ansprüche 1 bis 7, wobei das Polyolefin ein Polyethylen ist.

9. Verfahren nach Anspruch 8, wobei das Polyethylen ein Polyethylen mit hoher Dichte mit einer gemäß ISO 1183 bei 23 °C bestimmten Dichte von 0,945 bis 965 g/cm³ ist.

10. Verfahren nach einem der Ansprüche 1 bis 9, wobei eines der Additive Ruß ist.

11. Verfahren nach Anspruch 10, wobei der Ruß in Form eines Ruß-Masterbatches eingespeist wird.

12. Verfahren nach einem der Ansprüche 1 bis 11, das zusätzlich umfasst:
(viii) Zuführen von Polyolefinpellets zu demselben Fülltrichter (7); und
(ix) Anpassen der Flussrate der in den Fülltrichter (7) eingespeisten Polymerpellets in Reaktion auf die gemessene Flussrate der Polyolefinpellets.

13. Verfahren nach einem der Ansprüche 1 bis 12, wobei die Extrudervorrichtung (8) ein kontinuierlicher Mischer mit gegenläufig rotierender und ineinander greifender Doppelschnecke ist oder die Extrudervorrichtung (8) mindestens einen gleichläufig rotierenden Doppelschneckenextruder umfasst.

## Revendications

1. Procédé pour la préparation en continu d'une composition de polyoléfine comprenant une polyoléfine bimodale ou multimodale et un ou plusieurs additifs dans un dispositif d'extrusion (8) équipé d'au moins une trémie (7) préparant des granules de polyoléfine de la composition de polyoléfine dans le dispositif d'extrusion (8), le procédé comprenant
(i) l'alimentation d'une polyoléfine bimodale ou multimodale sous la forme d'une poudre de polyoléfine à un certain débit vers la trémie (7) du dispositif d'extrusion (8) ;
(ii) la mesure d'un débit des granules de polyoléfine préparés dans le dispositif d'extrusion (8) ;
(iii) l'alimentation d'un ou plusieurs additifs à la même trémie (7) ;
(iv) l'ajustement du débit de la poudre de polyoléfine vers la trémie (7) en réponse au débit mesuré des granules de polyoléfine et soit le maintien du ou des débit(s) dudit un ou desdits plusieurs additifs alimentés à la trémie (7) constant(s) soit l'ajustement également du ou des débit(s) dudit un ou desdits plusieurs additifs alimentés à la trémie (7) en réponse au débit mesuré des granules de polyoléfine ;
(v) le transfert de la poudre de polyoléfine et des additifs de la trémie (7) dans le dispositif d'extrusion (8) ;
(vi) la fusion et l'homogénéisation de la poudre de polyoléfine et des additifs au sein du dispositif d'extrusion (8) pour former une composition de polyoléfine fondue ; et
(vii) la granulation de la composition de polyoléfine fondue, en donnant de ce fait les granules de polyoléfine.

2. Procédé selon la revendication 1, dans lequel le débit des granules de polyoléfine est mesuré par un débitmètre à matières solides (9).

3. Procédé selon la revendication 1 ou 2, dans lequel la poudre de polyoléfine est alimentée à partir d'un récipient de stockage (2), dans lequel la poudre de polyoléfine est maintenue dans un état fluide par un auxiliaire de déchargement.

4. Procédé selon l'une quelconque des revendications 1 à 3, dans lequel la poudre de polyoléfine et ledit un ou lesdits plusieurs additifs sont d'abord alimentés à un dispositif de mélange (25), qui mélange la poudre de polyoléfine et les additifs, et le mélange de poudre de polyoléfine et d'additifs est ensuite transféré du dispositif de mélange (25) à la trémie (7), et dans lequel le ou les débit(s) dudit un ou desdits plusieurs additifs sont mesurés tout en étant alimentés au dispositif de mélange (25) et le ou les débit(s) dudit un ou desdits plusieurs additifs et de la poudre de polyoléfine, alimentés au dispositif de mélange (25), sont ajustés en réponse au débit mesuré des granules de polyoléfine.

5. Procédé selon la revendication 4, dans lequel le dispositif de mélange (25) est un mélangeur à pales comprenant deux arbres contrarotatifs orientés horizontalement.

6. Procédé selon l'une quelconque des revendications 1 à 5, dans lequel la poudre de polyoléfine est transférée du récipient de stockage (2) à la trémie (7) par gravité.

7. Procédé selon l'une quelconque des revendications 1 à 6, dans lequel la poudre de polyoléfine est obtenue par polymérisation d'une ou plusieurs 1-oléfines dans une cascade d'au moins deux réacteurs de polymérisation.

8. Procédé selon l'une quelconque des revendications 1 à 7, dans lequel la polyoléfine est un polyéthylène.

9. Procédé selon la revendication 8, dans lequel le polyéthylène est un polyéthylène haute densité présentant une masse volumique déterminée selon ISO 1183 à 23 °C allant de 0,945 à 965 g/cm³.

10. Procédé selon l'une quelconque des revendications 1 à 9, dans lequel un des additifs est le noir de carbone.

11. Procédé selon la revendication 10, dans lequel le noir de carbone est introduit sous la forme d'un mélange-maître de noir de carbone.

12. Procédé selon l'une quelconque des revendications 1 à 11, comprenant en outre
(viii) l'alimentation des granules de polyoléfine à la même trémie (7) ; et
(ix) l'ajustement du débit des granules de polymère introduits dans la trémie (7) en réponse au débit mesuré des granules de polyoléfine.

13. Procédé selon l'une quelconque des revendications 1 à 12, dans lequel le dispositif d'extrusion (8) est un mélangeur continu avec double vis à contre-rotation et à engrènement ou le dispositif d'extrusion (8) comprend au moins une extrudeuse à double vis à rotation conjointe.
